# FASCICULE DE BREVET EUROPEEN

(11) **EP 1 966 109 B1**
(45) Date de publication et mention de la délivrance du brevet: **27.10.2010**
(21) Numéro de dépôt: 06831035.8
(22) Date de dépôt: 27.10.2006
(51) Int. Cl.: C04B 41/85, C04B 35/65

(54) **PRODUIT CERAMIQUE FRITTE A MATRICE AZOTEE AUX PROPRIETES DE SURFACE AMELIOREES**
SINTERKERAMIKPRODUKT MIT STICKSTOFFHALTIGER FORM MIT VERBESSERTEN OBERFLÄCHENEIGENSCHAFTEN
SINTERED CERAMIC PRODUCT HAVING A NITROGENOUS MOLD WITH IMPROVED SURFACE PROPERTIES

(30) Priorité: 28.10.2005 FR 0511073
(43) Date de publication de la demande: 10.09.2008
(73) Titulaire: Saint-Gobain Centre de Recherches et d'Etudes Européen, 92400 Courbevoie (FR)
(72) Inventeur: JORGE, Eric, F-84210 Les Valayans (FR); ROULET, Frédéric, F-13300 Salon de Provence (FR); SCHOENNAHL, Jacques, F-59300 Valenciennes (FR)
(74) Mandataire: Leszczynski, André
(86) Numéro de dépôt international: PCT/FR2006/002422
(87) Numéro de publication internationale: WO 2007/048940

(56) Documents cités:
- US-A- 4 038 092
- US-A- 4 539 224

## Description

La présente invention concerne un produit céramique fritté comportant un granulat lié par une matrice azotée et un procédé pour sa fabrication.

La présence d'une matrice azotée implique une fabrication par frittage réactif. De l'azote, généralement apporté par une atmosphère d'azote, réagit alors pendant le frittage pour former une matrice azotée, par exemple de SIAION, qui sert de liant à un granulat, par exemple de carbure der silicium, de SIAION ou d'alumine. Dans la suite de la description, ces produits sont qualifiés de matériaux « à matrice azotée ».

Les produits frittés à matrice azotée doivent être distingués des produits fabriqués par frittage non réactif, par exemple par frittage d'un mélange de poudres de Si₃N₄ et de BN. Dans les procédés de frittage non réactifs, l'azote apporté par les matières premières ne réagit pas ou peu pendant le frittage, de la chaux (CaO) ou de la magnésie (MgO) étant couramment utilisées pour faciliter le frittage. Le frittage non réactif conduit à une agglomération de grains, sans création d'une matrice liante, Le frittage non réactif est plus coûteux que le frittage réactif. De plus, il conduit à des produits ayant un retrait élevé lors de leur frittage.

Les produits frittés à matrice azotée doivent également être distingués des produits ne comportant pas de grains. Les propriétés de ces derniers produits sont généralement très différentes, en particulier en ce qui concerne la conductivité thermique et la résistance à la corrosion.

Des produits réfractaires à matrice azotée de nitrure de silicium ou de SIAION sont par exemple décrits dans US 2,752,258, EP 0 153 000, ou dans US 4,533,646 qui décrit un produit à base de corindon lié par du nitrure formé *in situ* par réaction de l'atmosphère de cuisson avec des composants du mélange, en particulier avec des poudres de silicium et d'alumine. Ces produits sont encore connus de US 4 243 621 qui décrit des produits de type SiAlON, ou de US 4,038,092. Pour améliorer la résistance mécanique d'un produit de nitrure de silicium à matrice azotée, US 4,038,092 préconise d'imprégner la surface de ce produit fritté avec de l'alumine et de le cuire sous atmosphère d'azote. Il en résulte une couche superficielle de SiAlON qui renforce la résistance du produit fritté.

Les matériaux céramiques frittés à matrice azotée, en particulier les matériaux à matrice de nitrure de silicium ou de SIAlON, forment cependant des structures plus ou moins cristallisées, plutôt allongées ou aciculaires, typiquement de diamètre de 0,1 à 2 µm et de longueur allant jusqu'à 1000 µm environ. Ces structures particulaires forment à la surface des pièces fabriquées une couche poussiéreuse, continue ou non, peu adhérente. Cette couche pulvérulente pose des problèmes, notamment d'adhésion avec les ciments de jointolement. Elle peut aussi sensibiliser les pièces à l'oxydation et conduire, dans certaines conditions, à des phénomènes de corrosion accélérée. Enfin cette couche pulvérulente peut être plus ou moins régulière et variable d'une pièce à une autre et générer des variations de couleur, qui ne sont pas souhaitées par l'utilisateur.

Pour résoudre ces problèmes, les pièces sont parfois brossées après cuisson. Mais cette opération est fastidieuse et coûteuse.

Il existe donc un besoin pour un produit céramique fritté à matrice azotée aux propriétés de surface améliorées et pouvant être fabriqué par des procédés moins coûteux que ceux de la technique antérieure.

Le but de l'invention est de satisfaire ce besoin. Selon l'invention, on atteint ce but au moyen d'un produit céramique fritté comportant un granulat lié par une matrice azotée, remarquable en ce qu'au moins un agent anti-poussières choisi parmi le calcium et le bore est présent dans une couche superficielle du produit, le taux massique de l'ensemble desdits agents anti-poussières dans ladite couche superficielle étant supérieur à celui mesuré sous ladite couche.

Par « sous la couche superficielle », on entend une région du produit s'étendant immédiatement sous la couche superficielle. De préférence cette région s'étend au plus Jusqu'à 5 cm, de préférence au plus jusqu'à 500 µm sous la couche superficielle. Autrement dit, pour déterminer si le taux massique d'agents anti-poussières sous la couche superficielle est inférieur à celui dans cette couche, on compare les taux moyens d'agents anti-poussières dans la couche superficielle et dans une couche d'une épaisseur d'au plus 5 cm, de préférence d'au plus 500 µm s'étendant immédiatement sous la couche superficielle.

Dans un mode de réalisation de l'invention, le taux en agent anti-pouseiéres de la couche superficielle est supérieur à celui mesuré en un point quelconque du produit situé sous cette couche superficielle, c'est-à-dire que la région « sous la couche superficielle » comprend tout le produit, sauf la couche superficielle.

La frontière entre la « couche superficielle » d'un produit et la région « sous la couche superficielle » est déterminée par la profondeur à partir de laquelle, en pénétrant depuis la surface vers le centre du produit, le taux en agent(s) anti-poussières reste sensiblement constant en fonction de la profondeur, ce taux devant être maintenu constant pendant au moins 500 µm après la frontière. Selon l'invention, la taux d'agent(s) anti-poussières se stabilise alors à une valeur inférieure à celle mesurée, en moyenne, dans la couche superficielle.

On appelle donc « couche superficielle » d'un produit la partie périphérique de ce produit s'étendant depuis sa surface jusqu'à cette frontière. Dans le cas où les agents anti-poussières sont déposés sur la pièce crue, la couche superficielle correspond à la région s'étendant depuis la surface du produit jusqu'à la fin de la zone de diffusion possible des agents anti-poussières déposés.

Sans qu'il soit possible actuellement d'apporter une explication théorique à ce phénomène, les inventeurs ont constaté que, de manière surprenante, la présence de calcium et/ou de bore à la surface d'un produit azoté fritté, résultant par exemple d'un dépôt sur la pièce crue, correspond à une diminution considérable du taux de particules non adhérentes sur ce produit. Désormais un brossage du produit fritté n'est donc plus nécessaire.

La couche superficielle s'étend de préférence à toute la surface du produit, mais peut également s'étendre à une portion seulement de celui-ci.

Le produit fritté selon l'invention présente encore, de préférence, une ou plusieurs des caractéristiques optionnelles suivantes :
- Le granulat et la matrice sont en des matériaux réfractaires.
- La couche superficielle présente un taux massique en agents anti-poussières (bore+calcium) supérieur ou égal à 0,25%.
- La couche superficielle présente un taux en calcium ou en bore supérieur au taux en calcium ou en bore, respectivement, du matériau sous cette couche superficielle.
- Toute la surface du produit est recouverte d'une couche superficielle présentant un taux de calcium et/ou un taux de bore supérleur(s) au taux de calcium et/ou au taux de bore, respectivement, sous ladite couche. De préférence, la région du produit sous la couche superficielle est constituée en un unique matériau.
- Le calcium et/ou le bore est présent sous la forme d'au moins un composé de calcium et/ou au moins un composé de bore, respectivement, ces composés étant de préférence des composés non oxydes, c'est-à-dire dépourvus d'oxygène.
- Le composé de calcium est choisi de préférence dans le groupe formé par les oxydes, les carbures, les nitrures, les fluorures, les alliages métalliques, les composés organométalliques contenant du calcium et, de préférence encore, parmi CaB₈, CaSiO₃ et CaCO₃ et le composé de bore est de préférence choisi dans le groupe formé par les oxydes, les carbures, les nitrures, les fluorures, les alliages métalliques, les composés organométalliques contenant du bore, en particulier B₄C, CaB₈, BN, TiB₂ ou H₃BO₃, de préférence dans le groupe formé par B₄C et CaB₈, de préférence encore le composé de bore est CaB₈.
- Ladite couche superficielle présente une épaisseur inférieure à 1000 µm, de préférence inférieure à 500 µm.
- Dans ladite couche superficielle du produit, le taux de bore est supérieur à 0,05% et/ou le taux de calcium est supérieur à 0,2% et, sous ladite couche le taux de bore est inférieur à 0,05% et/ou le taux de calcium est inférieur à 0,2%, respectivement, en pourcentages massiques.
- Le granulat comporte des grains de nitrure de silicium et/ou de SiAlON et/ou de carbure de silicium et/ou ou d'alumine.
- Le taux massique d'agent(s) anti-poussières dans la couche superficielle est, en moyenne, supérieur d'au moins 10%, de préférence d'au moins 20%, à celui mesuré sous la couche superficielle, sur la base du taux mesuré dans la couche superficielle.
- En ne considérant pas les agents anti-poussières, la composition du produit dans la couche superficielle est sensiblement identique à celle de la région sous la couche superficielle. Cette caractéristique est notamment obtenue lorsque l'agent anti-poussières est appliqué sur la pièce crue, éventuellement avec d'autres produits, comme un diluant, éliminés lors du frittage.

L'invention concerne également une pièce crue apte à former une matrice azotée par frittage réactif, la pièce crue comportant au moins un agent anti-poussières choisi parmi le calcium et le bore, le taux massique de l'ensemble desdits agents anti-poussières dans une couche superficielle du produit étant supérieur à celui mesuré sous ladite couche. De préférence, la pièce crue est enduite d'une composition comportant ledit agent anti-poussières.

De préférence la pièce crue selon l'invention présente des caractéristiques permettant sa transformation par frittage en un produit azoté fritté selon l'invention. En particulier, de préférence, elle présente une ou plusieurs des caractéristiques optionnelles suivantes :
- La pièce crue comporte des grains de nitrure de silicium et/ou de SiAlON et/ou de carbure de silicium et/ou ou d'alumine, de préférence de carbure de silicium et/ou ou d'alumine.
- La pièce crue comporte un précurseur de nitrure. Le frittage de la pièce crue conduit alors à une matrice de nitrure, de préférence de Si₃N₄.
- La couche superficielle présente un taux en calcium ou en bore supérieur au taux en calcium ou en bore, respectivement, du matériau sous cette couche superficielle.

On appelle « granulat » un ensemble de grains réfractaires dont au moins 90% en masse ont une grosseur comprise entre 50 µm et 5 mm.

On appelle « SiAlON » tout composé formé par une solution solide comportant un taux non nul d'azote (N), d'aluminium (Al), d'oxygène (O) et de silicium (Si). Il existe différentes formes de SiAlON, par exemple les β'SiAlON de formule Si_{6-z}Al_{z}O_{z}N_{8-z} pour lequel l'indice z est supérieur strictement à zéro ou les O'SLAION de formule Si₂₋ₓAlₓOₓ₊₁N₂₋ₓ pour lequel l'indice x est supérieur à O. L'invention n'est cependant pas limitée à un SiAlON particulier.

Par « matrice », on entend une phase cristallisée ou non, assurant une structure continue entre les grains et obtenue lors du traitement thermique (appelé aussi frittage) à partir des précurseurs apportés dans le mélange, de préférence sous forme de poudres de diamètre médian inférieur à 200 microns.

Par « taux de calcium et/ou de bore », on entend le pourcentage massique de calcium et/ou de bore, respectivement, quelle que soit sa forme, c'est-à-dire sous la forme de calcium/bore élémentaire ou d'un composé de calcium/bore.

L'invention concerne également un procédé de fabrication d'un produit céramique fritté à matrice azotée, comprenant un dépôt de bore et/ou de calcium sur au moins une partie de la surface d'une pièce crue, puis un frittage réactif de manière à fabriquer un produit selon l'invention.

Le dépôt de bore et/ou de calcium peut prendre la forme d'une incorporation dans la masse superficielle de la pièce crue et/ou d'une application d'un revêtement sur la pièce crue.

Avantageusement, l'incorporation de bore et/ou de calcium et/ou l'application d'un revêtement comportant du bore et/ou du calcium à la surface de la pièce crue, donc avant frittage, est totalement compatible avec le procédé de cuisson, notamment le déliantage et la diffusion d'azote jusqu'au centre des pièces à fritter.

Les conditions permettant un frittage réactif dépendent des matières premières mises en oeuvre est sont bien connues de l'homme du métier.

De préférence, le procédé selon l'invention comprend les étapes suivantes ;
a) préparation d'une pièce crue ;
b) dépôt, sur au moins une partie de la surface de la pièce crue préparée, d'une composition de revêtement comportant du bore et/ou du calcium ;
c) avant ou après l'étape b), séchage de la pièce crue,
d) cuisson de la pièce crue revêtue et séchée, sous atmosphère réductrice azotée, ou éventuellement si la pièce crue comporte de l'azote, sous une atmosphère non oxydante quelconque, à une température comprise entre 1300 et 1600°C, de manière à obtenir un produit fritté à matrice azotée,
la composition de revêtement étant choisie de manière que le produit fritté soit conforme à l'invention.

De préférence, à l'étape b), on dépose au moins 0,1 g de matières sèches par mètre carré de surface recouverte et/ou au plus 70 g de matières sèches par mètre carré de surface recouverte.

De préférence encore, on dépose sur la pièce crue les quantités suivantes de bore et/ou de calcium :
- en absence de bore, au moins 1,6 gramme, de préférence au moins 3,2 grammes, de calcium (Ca) par mètre carré de surface recouverte et par pourcentage d'azote dans la composition globale du produit fritté final;
- en absence de calcium dans la composition de revêtement, au moins 1,2 gramme, de préférence au moins 2,4 grammes, de bore (B) par mètre carré de surface recouverte et par pourcentage d'azote dans la composition du produit fritté final ;
- en présence de bore et de calcium dans la composition de revêtement, au moins 0,4 gramme, de préférence au moins 0,8 gramme, de calcium (Ca) et/ou au moins 0,6 gramme, de préférence au moins 1,2 gramme de bore (B) par mètre carré de surface recouverte et par pourcentage d'azote dans la composition du produit fritté final.

Sauf mention contraire, tous les pourcentages sont des pourcentages massiques.

Le procédé selon l'invention décrit ci-dessus comporte une première étape de préparation d'une pièce crue (étape a)). De nombreux procédés sont connus de l'homme du métier à cette fin. En particulier, des poudres des matières premières (poudres métalliques, oxydes) peuvent être mélangées à un ou plusieurs additifs, bien connus, et malaxées pour former une charge de départ.

Les additifs peuvent notamment comprendre des additifs de pressage. Ces additifs comprennent des plastifiants, par exemple des amidons modifiés ou des polyéthylènes glycol et des lubrifiants, par exemple des huiles solubles au des dérivés de stéarates.

Les additifs comprennent également, classiquement, un ou plusieurs liants dont la fonction est de former avec les matières premières une masse suffisamment rigide pour conserver sa forme jusqu'à la fin de l'étape c). Le choix du liant est dépendant de la forme souhaitée.

Tout liant connu ou mélange de liants connus peut être utilisé. Les liants sont de préférence « temporaires », c'est-à-dire qu'ils sont éliminés en tout ou en partie lors des étapes de séchage et de cuisson de la pièce, De préférence encore, au moins l'un des liants temporaires est une solution de dérivés d'amidon modifié, une solution aqueuse de dextrine ou de dérivés de la lignone, une solution d'un agent de synthèse tel que l'alcool de polyvinyle, une résine phénolique ou une autre résine de type époxy, un alcool furfurylique, ou un mélange de ceux-ci. De préférence encore, dans au moins une des charges, la quantité du liant temporaire est comprise entre 0,5 et 7 % en poids par rapport au poids des matières premières de la charge.

On ajoute également classiquement de l'eau à la charge de départ.

Les quantités de ces additifs et de l'eau ajoutée sont celles mises en oeuvre classiquement lors de la fabrication des produits frittés azotés selon la technique antérieure.

Le mélange des matières premières et des additifs est poursuivi jusqu'à obtention d'une charge de départ sensiblement homogène.

La charge de départ est ensuite disposée dans un moule, puis subit une compression par application d'une force sur la surface supérieure de la charge apte à la transformer an une pièce crue susceptible d'être frittée. Une pression spécifique de 300 à 600 kg/cm² est appropriée. Le pressage est de préférence effectué de manière uniaxiale ou isostatique, par exemple au moyen d'une presse hydraulique. Il peut être avantageusement complété par une opération de pilonnage, de damage manuel ou pneumatique ou de vibration.

On obtient alors une pièce crue que l'on peut démouler.

Alternativement, on peut préparer un barbotine en mettant en suspension une poudre de matières premières dans un liquide, par exemple dans de l'eau, avec ou sans additifs tels que liants, de préférence temporaires, dispersants, défloculants, polymères, etc. La barbotine est coulée dans un moule poreux, puis la liquide est évacué du moule jusqu'à la prise en masse. La pièce crue obtenue est alors démoulée.

Indépendamment de la préparation de la pièce crue, on prépare une composition de revêtement contenant du bore et/ou du calcium, de préférence des composés de bore et/ou de calcium (étape b)).

Pour fabriquer la composition de revêtement, on peut mélanger une poudre contenant du bore et/ou du calcium avec un diluant aqueux ou non aqueux, par exemple de l'eau, jusqu'à obtention d'une composition homogène.

De préférence, la poudre utilisée est choisie de manière qu'au moins 90% en masse des particules présentent une taille inférieure à 300 µm, de préférence inférieure à 200 µm, de préférence encore inférieure à 100 µm. Le produit selon l'invention présente alors une aptitude améliorée à adhérer aux ciments de jointoiement.

De préférence, l'application de la composition de revêtement est effectuée avant que les liants ne durcissent. Elle peut être réalisée par projection (par pulvérisation par exemple) ou par application directe sur la surface (au pinceau ou au rouleau par exemple), voire par trempage si le diluant de la composition de revêtement ne pose pas de problème de délitement de la pièce crue. La teneur en matières sèches de la composition de revêtement est déterminée en fonction du mode d'application choisi.

De préférence, on dépose à la surface de la pièce crue de 0,1 à 70 g de matières sèches par mètre carré de surface, un dépôt massique supérieur à 70g/m² conduisant en effet à des problèmes en application. L'épaisseur du dépôt est de préférence de 500 µm maximum après cuisson. Avantageusement, l'aspect du produit final est ainsi préservé. La quantité de matières sèches à déposer par mètre carré de surface et la présence éventuelle d'additifs permet à l'homme du métier de choisir le mode d'application le mieux adapté.

A l'étape c), la pièce crue au moins partiellement enduite de la composition de revêtement subit un séchage, par exemple par stockage dans une étuve à température et hygrométrie contrôlées, selon des procédés classiques. Le séchage peut être effectué à une température modérément élevée. De préférence il est effectué à une température comprise entre 110 et 200°C. Il dure classiquement entre 10 heures et une semaine selon le format de la pièce, Jusqu'à ce que l'humidité résiduelle de la pièce soit inférieure ou égale à 0,5 %.

La pièce est ensuite classiquement frittée, c'est-à-dire densifiée et consolidée par un traitement thermique (étape d)), dans des conditions bien connues permettant un frittage réactif, La pièce crue peut être placée sous une atmosphère non oxydante si de l'azote est apporté par les matières premières, par exemple par une poudre de SiAlON, ou sous atmosphère réductrice d'azote. L'apport de l'azote par les matières premières est particulièrement avantageux pour les pièces de grandes dimensions et/ou peu poreuses, au sein desquelles de l'azote gazeux peut avoir des difficultés à pénétrer.

La pression est de préférence la pression atmosphérique, mais une pression plus forte pourrait convenir. La température maximale de palier est comprise entre 1300 et 1600°C afin de former la ou les phases nitrures de la matrice liante.

Pendant le frittage réactif, l'azote réagit avec les matières premières de la charge pour former une matrice azotée apte à lier des grains de cette charge. Il en résulte un produit monolithique fritté selon l'invention, qui, de manière surprenante, présente un taux réduit de particules non adhérentes.

Ce produit présente une couleur externe plus sombre et homogène que celle d'un produit non traité. Cette couleur peut aller jusqu'au gris verdâtre.

Les exemples non limitatifs suivants sont donnés dans le but d'illustrer l'invention.
■ Pour caractériser le taux de particules non adhérentes (test n°1), on colle un ruban adhésif de 48 mm de large, par exemple de type Scotch® Box Sealing Tape 355 (polyester et résine de caoutchouc synthétique), sur la surface du produit testé, puis on le retire. On renouvelle l'opération jusqu'à ce que toutes les particules non adhérentes aient été détachées de cette surface. On vérifie par observation au microscope électronique à balayage de la surface collante du ruban que seules les particules non adhérentes, et non des grains (présentant un diamètre supérieur à 200 microns), ont été détachées. On pèse ensuite la masse arrachée et on la ramène à la surface du ruban adhésif collée sur le produit testé pour obtenir l'indice Tw, en g/m². Cette mesure est couplée à une observation de la surface du produit testé au microscope électronique à balayage afin de vérifier que toutes les particules non adhérentes ont bien été détachées.
■ La mesure des phases cristallisées présentes à la surface du produit testé est effectuée par Diffraction aux Rayons X.
■ Les taux en azote (N) dans les produits ont été mesurés au moyen d'analyseurs de type LECO (LECO TC 436 DR; LECO CS 300), Les valeurs données sont des pourcentages massiques.
■ Le taux de calcium et/ou de bore a été mesuré, localement, par une sonde spectroscopique à dispersion d'énergie (EDS en anglais) ou, pour le calcium, par microsonde à dispersion d'onde (WDS en anglais), et, en moyenne sur le dépôt, par analyse chimique.
■ Les tests d'oxydation ont été effectués selon la norme ASTM C863. Les échantillons (typiquement, de taille 25 x 25 x 120 mm) subissent un test d'au moins 100 heures à 900°C sous atmosphère saturée en vapeur d'eau. Les prises de masse et de volume sont des indicateurs du niveau d'oxydation.
■ Un premier test de corrosion a été effectué en observant le degré d'attaque d'un ensemble de deux éprouvettes liées par un joint en ciment, dans la zone des jonctions entre le joint et les éprouvettes, après avoir fait tourner cet ensemble, à 2cm/s, sous argon, dans un laitier de haut-foumeau et de fonte à 1500°C pendant 4 heures.
■ Selon un deuxième test de corrosion, l'ensemble de deux éprouvées liées par un joint en ciment a été mis en rotation, à 2cm/s, sous argon, dans un bain cryolithique en milieu oxydant à 1030°C avec insufflation d'air sec à 1 l/min pendant B heures. Le bain cryolithique présentait typiquement la composition massique suivante ; 80% cryolithe, 13% de fluorure d'aluminium, 5% d'alumine, le reste étant des impuretés.

Des produits de type SiC/Si₃N₄ (produit A), SiC/SiAlON (produit B) et Corindon/SiAlON (produit C) ont été testés. Le tableau 1 fournit les compositions des charges de départ, en pourcentages massiques.

**Tableau 1**

| | A | B | C |
|---|---|---|---|
| Matières premières (% massique par rapport au total des matières premières) | | | |
| Mélange de grains et poudres de SiC | 88 | 80 | |
| Mélange de grains et poudres de corindon noir | | | 80 |
| Poudre de silicium métal (D50<200 microns) | 14 | 8 | 7 |
| Poudre d'aluminium métal (<200 microns) | | 3 | 5 |
| Poudre d'alumine fine calcinée (D50<200 microns) | | 9 | 8 |
| Total matières premières | 100 | 100 | 100 |

| Ajouts¹ | | | |
|---|---|---|---|
| Lignone ajoutée | 2,5 | | |
| Amidon ou dérivé ajouté | 1 | 1 | 1 |
| Huile soluble ou lubrifiant ajouté | <1 | | |
| Eau ajoutée | 2,6-3,5 | 4-6,5 | 4-6,5 |

| | | | |
|---|---|---|---|
| ¹ : Les ajouts sont donnés en pourcentages massiques par rapport à la masse totale des matières premières (mélanges de grains et poudres minérales et métalliques) | | | |

90% en masse des particules du mélange de grains et poudres de SiC utilisé ont une taille comprise entre 0,05 et 5 mm.

90% en masse des particules du mélange de grains et poudres de corindon noir utilisé ont une taille comprise entre 0,05 et 5 mm.

Les produits A, B et C sont fabriqués de la manière suivante.

On procède d'abord à un malaxage Intensif au moyen d'un malaxeur de type Eirich, pendant 5 à 20 minutes, des matières premières, des additifs et de l'eau, dans les proportions du tableau 1, de manière à constituer une charge de départ.

La charge de départ est disposée dans un moule de dimensions 230*114*130 mm, puis est pressée à une pression spécifique typiquement de 600Kg/cm² afin d'obtenir une pièce crue de format 230*114*65mm.

Après démoulage, on pulvérise au pistolet sur la pièce crue une composition de revêtement de CaCO₃, ou de CaSiO₃, ou de B₄C, ou de CaB₆.

La composition de revêtement est préparée par mélange de 15 à 30 g de poudre de CaCO₃ (type OMYA ; diamètre moyen (D50) de 4pm), ou de B₄C (poudre D50 de 10 microns fournie par la société ESK), ou de CaSiO₃ (97% en masse des particules passant à travers un tamis à 50 µm; poudre fournie par la société Nordkalk Partek), ou de CaB₆ (D50 <45 microns, fournie par la société ESK), avec 100 à 250 g d'eau distillée, puis agitation manuelle de manière à obtenir une solution homogène.

L'appareil de projection est typiquement un pistolet de peinture de type Aerografo Spray Gun 9011 HVLP fourni par Asturo. La distance de pulvérisation typique est de 80 cm de la pièce crue. La quantité déposée par unité de surface est contrôlée par pesée de cibles calibrées disposées autour de la pièce à revêtir.

On laisse ensuite la pièce crue enduite à l'air libre jusqu'à ce que l'humidité résiduelle soit inférieure à 0,5%.

Enfin on la cuit sous atmosphère non oxydante d'azote à une température comprise entre 1300 et 1600°C.

Le tableau 2 suivant fournit les compositions des produits frittés obtenus, en pourcentages massiques, sans considération des agents anti-poussières.

**Tableau 2**

| | A | B | C |
|---|---|---|---|
| Sic | 78 | 76 | |
| Al₂O₃ sous forme Corindon | | 4 | 84 |
| Phase liante Nitrure sous forme Si₃N₄ | 20 | | |
| Phase liante Nitrure sous forme SiAlON | | 16 | 15 |
| Impuretés et phases non cristallisées | 2 | 2 | 1 |

Le tableau 3 suivant Illustre l'efficacité en terme de réduction du taux de particules non adhérentes Tw en fonction de la concentration de différentes formes d'ajouts à base de calcium et /ou de bore, pour les trois familles de produits A, B et C.

Les quantités de CaCO₃, CaSiO₃, B₄C et CaB₆ exprimées en g/m², et les quantités de calcium et de bore exprimées en g/m² et par pourcentage d'azote dans le produit, sont les quantités appliquées sur la pièce crue, et non les quantités mesurées sur la pièce frittée.

**Tableau 3**

| | A | | | B | | | C | | |
|---|---|---|---|---|---|---|---|---|---|
| Taux en azote % massique | 8,5% | | | 8% | | | 6% | | |
| Indice Tw salon test n°1 sur produit de référence non traité (g/m²) | 6,5 | | | 12 | | | 12 | | |
| % en nombre de particules non adhérentes éliminées (Tw sur produit traité/Tw sur produit non traité) | 50% | 75% | 90% | 50% | 75% | 90% | 50% | 75% | 90% |
| CaCO₃ en g/m² | 4 | 8 | 10 | 3 | 6 | 8 | 2 | 5 | 7,5 |
| Ca en g/m² par % d'azote | 0,25 | 0,49 | 0,82 | 0,20 | 0,40 | 0,53 | 0,16 | 0,40 | 0,80 |
| CaSiO₃ en g/m² | 3 | 7 | 10 | 3 | 7 | 10 | 3 | 7 | 10 |
| Ca en g/m² par % d'azote | 0,16 | 0,37 | 0,52 | 0,17 | 0,40 | 0,57 | 0.20 | 0,48 | 0,88 |
| B₄C en g/m² | 1 | 1,8 | 3 | 1 | 2,1 | 3 | 1 | 2,3 | 3 |
| B en g/m² par % d'azote | 0,12 | 0,22 | 0,36 | 0,13 | 0,28 | 0,40 | 0,16 | 0,36 | 0,47 |
| CaB₆ en g/m² | 0.7 | 1,5 | 2,5 | 0,7 | 1,8 | 2,5 | 0,6 | 1.5 | 2,5 |
| Ca en g/m² par % d'azote | 0,04 | 0,09 | 0,15 | 0,04 | 0,10 | 0,18 | 0,04 | 0.11 | 0,19 |
| B en g/m² par % d'azote | 0,07 | 0,14 | 0,24 | 0,07 | 0,17 | 0,26 | 0,06 | 0,19 | 0,31 |
| Ca+B en g/m² par % d'azote | 0,11 | 0,23 | 0.38 | 0,12 | 0.27 | 0,42 | 0,10 | 0,30 | 0,50 |

On constate que le pourcentage de particules non adhérentes éliminées augmente avec la quantité de calcium ou de bore appliquée sur la surface de la pièce crue. Pour un même pourcentage de particules non adhérentes éliminées, cette quantité varie également selon le type de produit traité.

Pour un produit donné, pour obtenir un pourcentage de particules non adhérentes éliminées déterminé, on constate qu'il est nécessaire d'apporter plus de calcium, en g/m², que de bore. De préférence, la composition de revêtement est donc une composition comportant au moins du bore.

En outre, on constate qu'un ajout combiné de calcium et de bore produit un effet de synergie remarquable, permettant ainsi avantageusement de réduire la quantité élémentaire totale ajoutée.

Deux produits en des matériaux de phase liante de même nature, par exemple les deux produits B et C en SiAlON, peuvent comporter des taux d'azote différents. Il est donc utile de comparer des taux de calcium ou de bore par mètre carré ramenés au taux massique d'azote dans le produit.

On constate qu'en présence de bore Il faut déposer au moins 0,04 gramme d'élément calcium par m² de surface et par pourcentage d'azote dans la composition du produit (au moins 0,16 g/m².%N sans ajout conjoint de bore) pour éliminer au moins la moitié des particules non adhérentes. En présence de calcium, il faut au moins 0,06 gramme d'élément bore par m² de surface et par pourcentage d'azote dans la composition du produit (au moins 0,12 g/m².%N sans ajout Conjoint de calcium) pour éliminer au moins la moitié des particules non adhérentes.

De préférence, pour assurer une élimination quasi-totale des particules non adhérentes, les taux sont environ 10 à 20 fois supérieurs : Il faut donc de préférence, en présence de bore déposer au moins 0,4 gramme, de préférence au moins 0,8 gramme, d'élément calcium par m² de surface et par pourcentage d'azote (au moins 1,6 g/m².%N de préférence 3,2 g/m².%N sans ajout conjoint de bore) et au moins 0,6 gramme, de préférence 1,2 gramme d'élément bore par m^{a} de surface et par pourcentage d'azote dans la composition du produit (au moins 1,2 g/m².%N, de préférence 2,4 gim².%N sans ajout conjoint de calcium).

Les observations microscopiques (MES) des produits A et C traités selon l'invention sont cohérentes avec les résultats du test n°1 (tableau 3). De manière surprenante, les analyses par Diffraction aux Rayons X montrent la présence d'anorthite à la surface du matériau C traité à au moins 0,5 g/m³ de calcium,

Les prélèvements sous les couches superficielles des produits A et C présentent typiquement une concentration en bore <0,05% et en calcium <0,2% mesurée par analyse chimique et exprimée en pourcentages massiques. Au contraire, la couche superficielle des produits selon l'invention enduits d'une composition comportant un composé de calcium et/ou un composé de bore présentent une concentration en bore > 0,05% et/ou en calcium >0,2%, en pourcentages massiques, Une analyse par microsonde permet aussi de quantifier la concentration massique, par exemple de calcium, dans cette couche superficielle.

Les tests de jointoiement effectuée sur des produits A, B et C enduits selon l'invention, avec les ciments réfractaires classiquement utilisés pour des pièces A, B et C non enduites connues, ne révèlent pas de problème particulier d'adhésion ou de tenue thermomécanique, notamment dans les plages de dépôt (g/m² ou g/m².%N) mentionnées ci-dessus.

Les tests d'oxydation montrent que le dépôt reste cohérent car il ne se produit pas de phénomène d'écaillage.

Le premier test de corrosion a été réalisé sur deux éprouvettes en matériau C jointoyées. Ce test ne montre pas d'attaque préférentielle au niveau du joint entre les deux éprouvettes traitées lorsque moins de 70 grammes de poudre CaCO₃ est appliqué par mètre carré, soit environ 5,6 grammes de calcium par mètre carré et par pourcentage d'azote dans le produit lorsque le dépôt a été réalisé avec CaCO₃.

Le deuxième test de corrosion a été réalisé sur deux éprouvettes en matériau A jointoyées. Il ne montre pas de corrosion préférentielle au niveau du joint ou de la surface traitée lorsque moins de 60 grammes de poudre B₄C est appliqué par mètre carré, soit environ 7,2 grammes de bore par mètre carré et par pourcentage d'azote dans le produit si le dépôt a été réalisé avec B₄C.

Comme cela apparaît clairement à présent, l'invention fournit une solution pour adapter, à un coût réduit, n'importe quel procédé actuel de fabrication de produits céramiques azotée frittés pour que lesdits produits ne présentent plus de particules non adhérentes à leur surface. Il suffit en effet d'incorporer ou d'appliquer un agent anti-poussières choisi parmi du calcium, du bore ou un mélange de ceux-ci sur la pièce crue avant frittage.

Bien entendu, la présente invention n'est pas limitée aux modes de réalisation décrits fournis à titre d'exemples illustratifs et non limitatifs.

En outre, l'application d'une composition de revêtement en surface d'une pièce crue n'est pas la seule vole pour fabriquer un produit céramique selon l'invention. Par exemple, un film ou une couche de poudre en un matériau comportant du calcium et/ou du bore pourrait être disposé sur au moins une partie de la surface intérieure du moule, avant déversement de la charge de départ. L'important est que du calcium et/ou du bore soit présent à la surface de la pièce crue avant frittage.

La composition de revêtement n'est pas nécessairement sous forme liquide, ni déposée sous forme d'une couche continue. Par exemple, une poudre contenant du calcium et/ou du bore pourrait être projetée à la surface de la pièce crue.

## Revendications

1. Produit céramique fritté comportant un granulat lié par une matrice azotée, **caractérisé en ce qu'**au moins un agent enti-pousslères choisi parmi le calcium et le bore est présent dans une couche superficielle du produit, le taux massique de l'ensemble desdits agents anti-poussières dans ladite couche superficielle étant supérieur à celui mesuré sous ladite couche.

2. Produit céramique fritté selon la revendication 1, dans lequel le granulat et la matrice sont en des matériaux réfractaires.

3. Produit céramique fritté selon l'une quelconque des revendications 1 et 2, dans lequel la couche superficielle présente un taux massique en agents anti-poussières supérieur ou égal à 0,25%.

4. Produit céramique fritté selon l'une quelconque des revendications précédentes, dans lequel la couche superficielle présente un taux en calcium ou en bore supérieur au taux en calcium ou en bore, respectivement, sous cette couche superficielle.

5. Produit céramique fritté selon l'une quelconque des revendications précédentes, dans lequel le calcium et/ou le bore est présent sous la forme d'au moins un composé de calcium et/ou au moins un composé de bore; respectivement.

6. Produit céramique fritté selon la revendication 5, dans lequel le composé de calcium et/ou le composé de bore est un composé non oxyde.

7. Produit céramique fritté selon la revendication 5, dans lequel le composé de calcium est choisi dans le groupe formé par les oxydes, les carbures, les nitrures, les fluorures, les alliages métalliques, les composés organométalliques contenant du calcium et, en particulier, est choisi parmi CaB₆, CaSiO₃ et CaCO₃, et le composé de bore est choisi dans le groupe formé par les oxydes, les carbures, les nitrures, les fluorures, les alliages métalliques, les composés organométalliques contenant du bore, en particulier, B₄C, CaB₆, BN, et TiB₂ et H₃BO₃.

8. Produit céramique fritté selon l'une quelconque des revendications précédentes, dans lequel la couche superficielle présente une épaisseur inférieure à 500 µm.

9. Produit céramique fritté selon l'une quelconque des revendications précédentes, dans lequel, dans la couche superficielle, la taux de bore est supérieur à 0,05% et/ou le taux de calcium est supérieur à 0,2% et, sous ladite couche, le taux de bore est inférieur à 0,05% et/ou le taux de calcium est inférieur à 0,2%, respectivement, en pourcentages massiques.

10. Produit céramique fritté selon l'une quelconque des revendications précédentes dans lequel le granulat comporte des grains de nitrure de silicium et/ou de SiAlON et/ou de carbure de silicium et/ou ou d'alumine.

11. Procédé de fabrication d'un produit céramique fritté à matrice azotée, comprenant un dépôt de bore et/ou de calcium sur au moins une partie de la surface d'une pièce crue, puis un frittage réactif de manière à fabriquer un produit selon l'une quelconque des revendications précédentes.

12. Procédé de fabrication d'un produit céramique fritté à matrice azotée selon la revendication 11, comprenant les étapes suivantes :
a) préparation d'une pièce crue ;
b) dépôt, sur au moins une partie de la surface de la pièce crue préparée, d'une composition de revêtement comportant du bore et/ou du calcium ;
c) avant ou après l'étape b), séchage de la pièce crue,
d) cuisson de la pièce crue revêtue et séchée, sous atmosphère réductrice azotée, ou éventuellement si la pièce crue comporte de l'azote, sous une atmosphère non oxydante quelconque, à une température comprise entre 1300 et 1600°C, de manière à obtenir un produit fritté à matrice azotée,
la composition de revêtement étant choisie de manière que le produit fritté soit conforme à l'une quelconque des revendications 1 à 10.

13. Procédé de fabrication selon l'une quelconque des revendications 11 et 12, dans lequel on dépose au moins 0,1 g de matières sèches par mètre carré de surface recouverte et/ou au plus 70 g de matières sèches par mètre carré de surface recouverte.

14. Procédé de fabrication selon l'une quelconque des revendications 11 à 13, dans lequel on dépose sur la pièce crue les quantités suivantes de bore et/ou de calcium :
en absence de bore, au moins 1,6 gramme, de préférence au moins 3,2 grammes, de calcium (Ce) par mètre carré de surface et par pourcentage d'azote dans la composition du produit fritte final ;
en absence de calcium, au moins 1,2 gramme, de préférence au moins 2,4 grammes, de bore (B) par mètre carré de surface et par pourcentage d'azote dans la composition du produit fritté final ;
- en présence de bore et de calcium, au moins 0,4 gramme, de préférence au moins 0,8 gramme, de calcium (Ca) et/ou au moins 0,8 gramme, de préférence au moins 1,2 gramme de bore (B) par mètre carré de surface recouverte et par pourcentage d'azote dans la composition du produit fritté final.

## Claims

1. A sintered ceramic product comprising a granular material bound by a nitrogenous matrix, **characterized in that** at least one anti-dust agent selected among calcium and boron is present in a surface layer of the product, the mass ratio of the whole of said anti-dust agents in said surface layer being greater than that measured underneath said layer.

2. A sintered ceramic product according to claim 1, wherein the granular material and the matrix are made of refractory materials.

3. A sintered ceramic product according to any one of the claims 1 and 2, wherein the surface layer has a mass ratio of anti-dust agents greater than or equal to 0.25%.

4. A sintered ceramic product according to any one of the preceding claims, wherein the surface layer has a calcium or boron ratio greater than the ratio of calcium or boron, respectively, beneath said surface layer.

5. A sintered ceramic product according to any one of the preceding claims, wherein the calcium and/or boron is present in the form of at least one calcium compound and/or at least one boron compound, respectively.

6. A sintered ceramic product according to claim 5, wherein the calcium compound and/or the boron compound is a non-oxide compound.

7. A sintered ceramic product according to claim 5, wherein the calcium compound is selected from the group consisting of oxides, carbides, nitrides, fluorides, metal alloys and calcium-containing organometallic compounds and, in particular, is selected from CaB₆, CaSiO₃ and CaCO₃, and the boron compound is selected from the group consisting of oxides, carbides, nitrides, fluorides, metal alloys, boron-containing organometallic compounds, in particular B₄C, CaB₆, BN, and TiB₂ and H₃BO₃.

8. A sintered ceramic product according to any one of the preceding claims, wherein the surface layer has a thickness of less than 500 µm.

9. A sintered ceramic product according to any one of the preceding claims, wherein, in the surface layer, the boron ratio is greater than 0.05% and/or the calcium ratio is greater than 0.2% and, underneath said layer, the boron ratio is less than 0.05% and/or the calcium ratio is less than 0.2%, respectively, in percentages by weight.

10. A sintered ceramic product according to any one of the preceding claims, wherein the granular material comprises grains of silicon nitride and/or SiAlON, and/or silicon carbide, and/or alumina.

11. A method for manufacturing a sintered ceramic product having a nitrogenous matrix, comprising a deposition of boron and/or calcium on at least one portion of the surface of a green part, then a reactive sintering so as to manufacture a product according to any one of the preceding claims.

12. The method for manufacturing a sintered ceramic product having a nitrogenous matrix according to claim 11, comprising the following steps:
a) preparation of a green part;
b) deposition, on at least one portion of the surface of the prepared green part, of a coating composition comprising boron and/or calcium;
c) before or after step b), drying said green part,
d) firing the coated and dried green part, under a reducing nitrogen atmosphere, or possibly if the green part comprises nitrogen, under any non-oxidizing atmosphere, at a temperature ranging between 1300 and 1600°C, so as to obtain a sintered product having a nitrogenous matrix,
the coating composition being selected so that the sintered product conform to any one of the claims 1 to 10.

13. A manufacturing method according to any one of the claims 11 and 12, wherein at least 0.1 g of dry material per square meter of coated surface and/or at most 70 g of dry material per square meter of coated surface are deposited.

14. A manufacturing method according to any one of the claims 11 to 13, wherein the following amounts of boron and/or calcium are deposited on the green part:
- in the absence of boron, at least 1.6 g, preferably at least 3.2 g, of calcium (Ca) per square meter of surface and per percent of nitrogen in the composition of the final sintered product;
- in the absence of calcium, at least 1.2 g, preferably at least 2.4 g, of boron (B) per square meter of surface and per percent of nitrogen in the composition of the final sintered product;
- in the presence of boron and calcium, at least 0.4 g, preferably at least 0.8 g, of calcium (Ca) and/or at least 0.6 g, preferably at least 1.2 g of boron (B) per square meter of coated surface and per percent of nitrogen in the composition of the final sintered product.

## Patentansprüche

1. Sinter-Keramik-Produkt mit einem Granulat, welches durch eine Stickstoffmatrix gebunden ist, **dadurch gekennzeichnet, dass** mindestens ein staubabweisendes Mittel, ausgewählt aus Calcium und Bor, in der Oberflächenschicht des Sinter-Keramik-Produkts vorhanden ist, wobei der Massenanteil der Gesamtheit der staubabweisenden Mittel in der Oberflächenschicht grösser als ist als der Massenanteil dieser Mittel unterhalb der Oberflächenschicht.

2. Sinter-Keramik-Produkt nach Anspruch 1, in welchem das Granulat und die Matrix aus feuerfesten Materialien bestehen.

3. Sinter-Keramik-Produkt nach einem beliebigen der Ansprüche 1 und 2, in welchem die Oberflächenschicht einen Massenanteil der staubabweisenden Mittel größer oder gleich 0,25% aufweist.

4. Sinter-Keramik-Produkt nach einem beliebigen der vorherigen Ansprüche, in welchem der jeweilige Anteil von Calcium oder Bor in der Oberflächenschicht größer als der jeweilige Anteil von Calcium oder Bor unterhalb der Oberflächenschicht ist.

5. Sinter-Keramik-Produkt nach einem beliebigen der vorherigen Ansprüche, in welchem das Calcium und/oder das Bor jeweils in Form von mindestens einer Calciumverbindung und/oder Borverbindung vorkommt.

6. Sinter-Keramik-Produkt nach Anspruch 5, in welchem die Calciumverbindung und/oder die Borverbindung eine Nicht-Oxid-Verbindung ist.

7. Sinter-Keramik-Produkt nach Anspruch 5, in welchem die Calciumverbindung ausgewählt ist aus der Gruppe bestehend aus Oxiden, Carbiden, Nitriden, Fluoriden, Metall-Legierungen, metallorganischen Verbindungen mit Calcium, und insbesondere CaB₆, CaSiO₃ und CaCO₃, und die Borverbindung ausgewählt ist aus der Gruppe bestehend aus Oxiden, Carbiden, Nitriden, Fluoriden, Metall-Legierungen, metallorganischen Verbindungen mit Bor, und insbesondere B₄C, CaB₆, BN und TiB₂ und H₃BO₃.

8. Sinter-Keramik-Produkt nach einem beliebigen der vorherigen Ansprüche, in welchem die Oberflächenschicht eine Dicke kleiner als 500 Mikrometer aufweist.

9. Sinter-Keramik-Produkt nach einem beliebigen der vorherigen Ansprüche, in welchem in der Oberflächenschicht der Masseanteil von Bor größer als 0,05% und/oder der Masseanteil von Calcium größer als 0,2% ist und unterhalb der Oberflächenschicht der Masseanteil von Bor kleiner als 0,05% und/oder der Masseanteil von Calcium kleiner als 0,2% ist.

10. Sinter-Keramik-Produkt nach einem beliebigen der vorherigen Ansprüche, in welchem das Granulat Körner aus Siliziumnitrid und/oder aus SiAlON und/oder aus Siliziumcarbid und/oder aus Aluminiumoxid aufweist.

11. Verfahren zum Herstellen eines Sinter-Keramik-Produktes mit Stickstoffmatrix, welches eine Ablagerung von Bor und/oder Calcium auf zumindest einem Teil der Oberfläche eines Rohlings aufweist, mit einem anschließenden reaktiven Sintern in einer Weise, welche ein Sinter-Keramik-Produkt nach einem beliebigen der oben genannten Ansprüche herstellt.

12. Verfahren zum Herstellen eines Sinter-Keramik-Produktes nach Anspruch 11, welches die folgenden Schritte aufweist:
a) Präparierung eines Rohlings;
b) Ablagerung einer Bor und/oder Calcium aufweisenden Beschichtungszusammensetzung auf zumindest einem Teil der Oberfläche des präparierten Rohlings;
c) vor oder nach Schritt b), Trocknung des Rohlings
d) Brennen des beschichteten und getrockneten Rohlings in einer reduzierenden Stickstoffatmosphäre, oder möglicherweise, falls der Rohling Stickstoff aufweist, in einer beliebigen nicht-oxidierender Atmosphäre, bei einer Temperatur zwischen 1300 und 1600°C in einer Weise, mit welcher man ein Sinterprodukt mit Stickstoffmatrix erhält,
die Beschichtungszusammensetzung ist so gewählt, dass das Sinterprodukt mit einem beliebigen der Ansprüche 1 bis 10 übereinstimmt.

13. Herstellungsverfahren nach einem beliebigen der Ansprüche 11 und 12, bei welchem man mindestens 0,1g des trockenen Materials pro Quadratmeter der bedeckten Oberfläche, und maximal 70 g des trockenen Materials pro Quadratmeter der bedeckten Oberfläche ablagert.

14. Herstellungsverfahren nach einem beliebigen der Ansprüche 11 bis 13, bei welchem man auf den Rohling die folgenden Mengen an Bor und/oder Calcium aufträgt:
- in Abwesenheit von Bor, mindestens 1,6 Gramm, vorzugsweise mindestens 3,2 Gramm, Calcium (Ca) pro Quadratmeter Oberfläche und pro Prozent Stickstoff in der Zusammensetzung des finalen gesinterten Produktes;
- in Abwesenheit von Calcium, mindestens 1,2 Gramm, vorzugsweise mindestens 2,4 Gramm, Bor (B) pro Quadratmeter Oberfläche und pro Prozent Stickstoff in der Zusammensetzung des finalen gesinterten Produktes;
- in Anwesenheit von Bor und Calcium, mindestens 0,4 Gramm, vorzugsweise mindestens 0,8 Gramm, Calcium (Ca) und/oder mindestens 0,8 Gramm, vorzugsweise mindestens 1,2 Gramm, Bor (B) pro Quadratmeter Oberfläche und pro Prozent Stickstoff in der Zusammensetzung des finalen gesinterten Produktes.
